# EUROPÄISCHE PATENTSCHRIFT

(11) **EP 2 735 090 B1**
(45) Veröffentlichungstag und Bekanntmachung des Hinweises auf die Patenterteilung: **01.03.2017**
(21) Anmeldenummer: 12729632.5
(22) Anmeldetag: 26.06.2012
(51) Int. Cl.: H02K 3/51, H02K 3/38, H02K 7/14

(54) **RINGELEMENT FÜR EINEN LÄUFER EINES ELEKTROMOTORS**
RING ELEMENT FOR A ROTOR OF AN ELECTRIC MOTOR
ÉLÉMENT ANNULAIRE POUR ROTOR D'UN MOTEUR ÉLECTRIQUE

(30) Priorität: 18.07.2011 DE 102011079332
(43) Veröffentlichungstag der Anmeldung: 28.05.2014
(73) Patentinhaber: Robert Bosch GmbH, 70442 Stuttgart (DE)
(72) Erfinder: EFFLER, Josef, 71144 Steinenbronn (DE); WAGNER, Christoph, 71686 Remseck-Pattonville (DE); SCHADOW, Joachim, 70563 Stuttgart (DE); HEIN, Juergen, 70806 Kornwestheim (DE); GOEHNER, Joerg, 71034 Boeblingen-Dagersheim (DE)
(86) Internationale Anmeldenummer: PCT/EP2012/062333
(87) Internationale Veröffentlichungsnummer: WO 2013/010757

(56) Entgegenhaltungen:
- EP-A1- 0 515 783
- EP-A1- 0 630 095
- DE-A1- 3 044 537
- FR-A1- 2 778 282

## Beschreibung

### Stand der Technik

Die Erfindung geht aus von einem Ringelement zur Anordnung an zumindest einem axialen Endbereich eines Wicklungsabschnittes eines Elektromotor-Läufers. Des Weiteren betrifft die Erfindung ein Isolierlamellenelement, das ein erfindungsgemäßes Ringelement umfasst. Schließlich betrifft die Erfindung einen Elektromotor, auf dessen Läufer ein derartiges Ringelement angeordnet ist, sowie eine Elektrowerkzeugmaschine, die einen erfindungsgemäßen Elektromotor umfasst.

In Elektromotoren für Elektrowerkzeugmaschinen, insbesondere Winkelschleifer, Bohrmaschine, Säge, Stichsägen oder ähnliches werden in der Regel Universalmotoren, d. h. Reihenschlussmotoren eingesetzt, deren Läufer eine Läuferwicklung tragen, die über einen Kommutator mit Strom versorgt wird. Im Bereich der Wicklungsköpfe an den axialen Endbereichen eines Wicklungsabschnitts weisen insbesondere die inneren Wicklungslagen einen kleinen Krümmungsradius auf und sind hohen mechanischen und thermischen Belastungen ausgesetzt. So weisen im kompakten Bauraum die inneren Lagen der Läuferwicklungen einen sehr kleinen Biegeradius auf, wobei die Drahtspulen einer hohen thermischen Belastungen ausgesetzt sind, sowie Fliehkräften standhalten müssen. Hierzu ist es bekannt, eine Fixierung der Wicklungslagen über Träufelharz zur verbesserten Verbindung einzusetzen, wobei ein homogener Wicklungsquerschnitt sowie die Einhaltung von Mindestbiegeradien angestrebt werden. Die innerste Wicklungslage kann jedoch nicht eindeutig im Wicklungspaket fixiert werden, wobei sie im Bereich der Wicklungsköpfe an einem axialen Endbereich des Wicklungsabschnitts des Elektromotorläufers quasi im freien Raum liegt und eine Harzfixierung keine Anbindung finden kann.

Hieraus ergibt sich das Problem, dass die innere Wicklungslage im Bereich der Wicklungsköpfe nicht ausreichend fixiert und sowohl gegen thermische als auch mechanische Belastungen unzureichend geschützt ist, insbesondere gegen hohe Vibrationen und Fliehkräfte.

Insbesondere bei dynamischen Lastwechseln, wie sie beispielsweise bei Elektrowerkzeugmaschinen unter Volllast und danach im Leerlauf bei hohen Drehzahlen stattfinden, steigt die Temperatur der Läuferwicklungen auf über 210°C, so dass eine kritische Schwelltemperatur für die Lackisolierung erreicht wird. Dabei zeigt sich, dass wiederum bei 70 % dieser Ausfälle die Windungsschlüsse in den inneren Lagen der Wicklungsköpfe verursacht sind, so dass in etwa 50 % aller Motorenausfälle auf Wicklungsschlüsse in den innersten Lagen der Wicklungsköpfe zurückzuführen sind.

Aus der DE 30 44537 A1 ist eine elektrische Maschine bekannt, deren Endlamellen im zentralen Bereich eine konvex aufgewölbten Bereich aufweist. Die Endlamelle mit dem aufgewölbten Bereich dient der elektrischen Isolierung des Rotors.

Die EP 0 630 095 A1 offenbart einen Elektromotor mit einer Endlamelle, die im Zentrum einen Zapfen aufweist, der am lamellenständigen Ende mit einem Ring umgeben ist. Die Anordnung dient dazu, den Abstand zwischen Spulenwicklung und Rotor zu vergrößern, um den Kriechabstand zu verbessern.

Die EP 0 515 783 A1 offenbart einen Elektromotor mit kurzer Baulänge mit einer Endscheibe mit zylindrischen Ansatz, in dem stirnseitig eine zylinderförmige Ausnehmung eingebracht ist, und die Teile des Rotorlagers aufnimmt.

### Offenbarung der Erfindung

Gemäß eines ersten Aspekts der Erfindung wird ein Ringelement vorgeschlagen, dass eine konvexe, insbesondere abgerundete Teiloberfläche zur Anordnung an zumindest einem axialen Endbereich eines Wicklungsabschnittes eines Elektromotor-Läufers umfasst. Die Teiloberfläche weist eine minimale Radiuskrümmung R_{d} zur Abstützung einer inneren Lage einer Läuferwicklung am Wicklungskopf auf. Das Ringelement dient dazu, die innerste Lage der Läuferwicklung am Wicklungskopf abzustützen, so dass sie gegen mechanische Belastungen gesichert, eine thermische Ankopplung an das Läuferblechpaket herstellt sowie ein minimaler Biegeradius der Drahtspulen bereitgestellt wird, wodurch mechanische und thermische Belastungen auf die innerste Lage reduziert und damit Wicklungsschlüsse vermindert werden können. Mit anderen Worten wird ein Ringelement einem kritischen Abschnitt der Läuferspule im Bereich der Wicklungsköpfe unterlegt, das eine konvexe bzw. abgerundete Form eines drahtführenden Teilbereichs aufweist, der in etwa einem natürlichen Verlauf der Läuferwicklung angepasst ist. Das Ringelement kann beispielsweise als Längsschnitt durch einen Ringtorus ausgebildet sein. Es weist eine flache Teiloberfläche auf, die in Richtung des läuferwicklungstragenden Eisenpakets ausrichtbar ist, und eine abgerundete, beispielsweise halbkreis- oder kreisförmige Teiloberfläche auf, die in Richtung Wicklungsköpfe ausrichtbar ist. Das Ringelement hat die Aufgabe, einen kritischen Biegeradius zu entschärfen und die Wicklungslage zwangszuführen. Der bisherige Leerraum im Wicklungskopf zwischen innerer Wicklungslage und Läuferblechpaket wird aufgefüllt und die innerste Lage mechanisch abgestützt. Eine zusätzliche Isolierung und Fixierung durch Träufelharz kann eine Verbindung zwischen innerster Wicklungslage und Ringelement herstellen. Somit werden kritische Biegeradien des Kupferdrahtes verhindert, eine Fixierung der Spule ermöglicht sowie durch Einharzen der Läuferspule eine mechanische Fixierung der Wicklungsköpfe erreicht. Der Einfluss von Fliehkräften sowie die thermische Belastung auf die innerste Wicklungslage wird reduziert.

Das Ringelement weist ferner ein Verhältnis von Außen- zum Innendurchmesser Rₐ/Rᵢ auf, das im Bereich 1.3 bis 1.8, insbesondere 1.5 bis 1.6, liegt. Durch dieses Verhältnis wird eine relativ geringe Massenträgheit des Ringelements erreicht und eine genügend große Abstützfläche für den Biegeradius der inneren Läuferwicklungslage bereitgestellt.

Vorteilhaft wird mit der Erfindung eine mechanische Fixierung und eine Reduzierung des Biegewinkels der inneren Wicklungslagen an den axialen Endbereichen eines Wicklungsabschnitts eines Elektromotor-Läufers bereitgestellt, so dass die Gefahr von Wicklungsschlüssen am Wicklungskopf eines Elektromotoren-Läufers reduziert und somit die Lebensdauer eines Elektromotors erhöht werden kann.

Gemäß einer vorteilhaften Weiterbildung der Erfindung kann das Ringelement einstückig mit einem Isolierlamellenelement ausgeformt sein. Ein Isolierlamellenelement dient zur Fixierung und Ausrichtung der Wicklungslagen und somit zur Ausbildung von definierten Nordpol/Südpol-Ausrichtungen des Läufermagnetfeldes. Das Isolierlamellenelement isoliert die Wicklungslagen am axialen Endbereich des Wicklungsabschnitts gegenüber dem Läuferblechpaket. Das Ringelement kann einstückig mit dem isolierlamellenelement ausgeformt werden, so dass nur eine geringe Anzahl von Läuferbauteilen zum Zusammenbau eines Läuferrohlings benötigt werden.

Ausgehend von dem vorangegangenen Ausführungsbeispiel kann vorteilhaft das Ringelement an das Isolierlamellenelement anspritzbar, anschäumbar oder aus dem Isolierlamellenelement durch Umformung ausformbar sein. So kann beispielsweise das Ringelement auf dem Isolierlamellenelement mittels eines 2K-Verfahrens, d.h. Zwei-Komponenten-Verfahrens aufgespritzt werden. Mittels eines bekannten Aufschäumverfahrens kann das Ringelelement auf ein Isolierlamellenelement aufgeschäumt werden. Auch ist denkbar, dass durch Umformung eines Komplettbauteils aus Isolationsstoff ein Isolierlamellenelement mit ausgeformtem Ringelement erzeugt werden kann. So kann beispielsweise durch geeignete Presswerkzeuge ein formbares Isoliermaterial zur Ausbildung eines Isolierlamellenelements mit integriertem Ringelement mechanisch umgeformt werden. Des Weiteren ist denkbar, das Isolierlamellenelement einstückig mit integriertem Ringelement bei der Herstellung auszuformen.

Alternativ zu der oben genannten Ausführungsform kann in einer weiteren vorteilhaften Ausgestaltung das Ringelement mit einem Isolierlamellenelement verbindbar sein. Hierzu bietet es sich weiterhin vorteilhaft an, dass das Isolierlamellenelement aufsteckbar, anklebbar und/oder anschweißbar ist. Hierzu kann das Ringelement beispielsweise Stecknasen oder Rastnasen aufweisen, und das Isolierlamellenelement formkomplementäre Steckausnehmungen bzw. Rastausnehmungen aufweisen, oder umgekehrt. Hierbei ist es möglich, das Ringelement aus einem anderen Material als das Isolierlamellenelement zu fertigen, beispielsweise aus einem Material hoher thermischer Leitfähigkeit, um Abwärme der Wicklungsköpfe auf das Läuferblechpaket weiter zu leiten. Des Weiteren können bereits vorhandene Isolierlamellenelemente durch Hinzufügung von Ringelementen zur Erreichung der erfindungsgemäßen Vorteile weitergebildet bzw. nachgerüstet werden. Grundsätzlich können die Isolierlamellenelemente ohne Befestigung mit dem Ringelement auf einer Läuferachse zusammengeführt werden. Durch Verbindungsmittel, beispielsweise Steck- oder Rastnasen und entsprechende Ausnehmungen kann das Ringelement auf ein vorhandenes Isolierlamellenelement aufgesteckt und beispielsweise am Innendurchmesser befestigt werden. Des Weiteren ist denkbar beispielsweise mittels kleben oder Ultraschallschweißen das Ringelement mit dem Isolierlamellenelement dauerhaft zu verbinden.

Gemäß einer vorteilhaften Weiterbildung der Erfindung kann das Ringelement aus einem isolierenden Material, insbesondere aus einem hitzebeständigem Kunststoff mit maximaler Einsatztemperatur T_{C}>210°C bestehen. Aufgrund der hohen mechanischen und thermischen Belastung sowie der erforderlichen Isolation der Wicklungsdrähte gegenüber dem Blechpaket des Läufers ist das Ring-element vorteilhafterweise aus elektrisch nicht leitfähigem Material, dass dennoch eine hohe thermische Leitfähigkeit aufweisen sollte, ausgebildet. Die maximale Einsatztemperatur des Ringelementes sollte dabei über 200°C, besser 210°C betragen, da Versuche gezeigt haben, dass in einem Blockierbetrieb, in dem zwischen Hochlast- und Freilaufphasen des Elektromotors zyklisch gewechselt wird, solche Temperaturen erreicht werden können. Bis zu dieser Temperatur soll das Ringelement seine elektrisch isolierende und mechanisch stabilisierende Wirkung aufweisen, um eine hohe Langlebigkeit des Elektromotors zu gewährleisten.

Gemäß einer vorteilhaften Weiterbildung der Erfindung kann additiv oder alternativ das Verhältnis Außendurchmesser zur Dicke Rₐ/d des Elements im Bereich 10 bis 15, insbesondere 12.5 bis 13.5 liegen, oder alternativ die Dicke d im Bereich 1.5 mm bis 3.5 mm, bevorzugt 2 mm bis 3 mm liegen. Somit wird ein relativ dünnes Ringelement vorgeschlagen, so dass die Baugröße des Läufers nur geringfügig verändert ist, und eine kleinvolumige Ausbildung der Wicklungsköpfe erreicht werden kann. Dennoch genügt der vorgegebene Biegeradius, um eine hohe mechanische Stabilität und Resistenz gegen hohe Temperaturen zu erreichen. Alternativ und/oder additiv kann der Krümmungsradius R_{d} der konvexen Teiloberfläche des Ringelements im Wesentlichen der Dicke d entsprechen, so dass der innere Wicklungsdraht entlang der Krümmung des Ringelements geführt werden kann, das auf der einen Längsseite flach, auf der anderen Seite konvex gekrümmt bzw. eine radial gekrümmte und vorzugsweise kreisförmige Außenkontur der Oberfläche aufweist. Hierdurch wird der Luftraum zwischen Wicklungskopf und Isolierlamellenelement durch das Ringelement gefüllt, die innere Wicklungslage mechanisch abgestützt und die innerste Lage der Läuferwicklung definiert geführt.

In einem nebengeordneten Aspekt der Erfindung wird ein Isolierlamellenelement für einen Elektromotor-Läufer zur Bewicklung mit einer Läuferwicklung vorgeschlagen, die ein Ringelement nach einem der vorangegangenen Ausführungsbeispiele umfasst. Das Ringelement kann mit dem Isolierlamellenelement zweiteilig ausgeformt und miteinander verbunden, beispielsweise verklebt, verrastet oder verschraubt sein, oder das beispielsweise in einer Form gespritzt, aufgeschäumt, mittels Zwei-Komponenten-Technik ausgebildet oder durch Umformung des Isolierlamellenelements ein zusätzliches Ringelement ausgebildet sein. Ein solches Isolierlamellenelement kann ohne Veränderung der bisherigen Struktur oder des grundsätzlichen Designs in einem bestehenden Elektromotorendesign eingesetzt werden und bietet somit die erfindungsgemäßen Vorteile.

Gemäß eines weiteren Aspekts der Erfindung wird ein Elektromotor, insbesondere ein Universalmotor, d.h. Reihenschlussmotor vorgeschlagen, der einen Läufer mit einer Läuferwicklung aufweist, auf dem zumindest ein Ringelement nach einem der vorangegangenen Ausführungsbeispiele umfasst ist. Die Läuferwicklung wird mechanisch und thermisch robuster, so dass eine höhere Lebensdauer und Resistenz gegen Wicklungskurzschlüsse, insbesondere im Bereich der Wicklungsköpfe erreicht werden kann.

Schließlich wird in einem weiteren nebengeordneten Aspekt eine Elektrowerkzeugmaschine, insbesondere eine handgehaltene Elektrowerkzeugmaschine wie Winkelschleifer, Bohrmaschine, Sägewerkzeug oder ähnliches vorgeschlagen, die einen vorgenannten Elektromotor umfasst. Insbesondere in einer Elektrowerkzeugmaschine mit kompaktem Bauraum und einem kleinvolumigen Motor, der einer großen Anzahl dynamischer Lastwechsel ausgesetzt ist, treten erfahrungsgemäß im gehäuften Maße Wicklungskurzschlüsse durch die auftretenden hohen thermischen und mechanischen Belastungen auf. Durch den Einsatz eines vorgeschlagenen Ringelements an beiden Endabschnitten einer Läuferwicklung des Elektromotors kann die Lebensdauer und Qualität der Werkzeugmaschine erheblich gesteigert werden. Somit können Garantiekosten reduziert, ein Markenimage aufgebessert und die Werthaltigkeit der Werkzeugmaschine gesteigert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1:: in einer Seitenansicht einen Läufer eines Elektromotors;
- Fig. 2:: ein Teilausschnitt eines Wicklungskopfes nach dem Stand der Technik;
- Fig. 3:: eine Ausfallkurve von Elektromotoren nach dem Stand der Technik;
- Fig. 4:: ein Ausführungsbeispiel eines Ringelements gemäß der Erfindung;
- Fig. 5:: Kombinationen von Ringelementen und Isolatorlamellenelementen gemäß Ausführungsbeispielen der Erfindung in perspektivischer Ansicht;
- Fig. 6:: schematisch ein Vergleich eines Wicklungskopfs des Stands der Technik gegenüber einem erfindungsgemäßen Wicklungskopf;
- Fig. 7:: ein Detailausschnitt eines Wicklungskopfs mit einem Ausführungsbeispiels eines Ringelements.

### Ausführungsformen der Erfindung

In den Figuren sind gleiche oder gleichartige Komponenten mit gleichen Bezugszeichen beziffert.

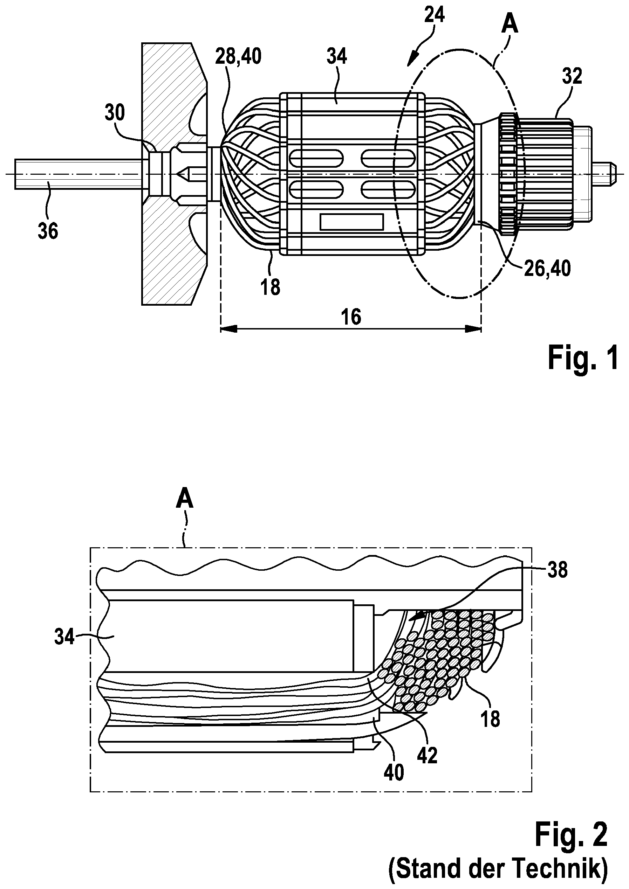

Zur Erläuterung der Erfindung zeigt die Fig. 1 in einer Seitenansicht einen Läufer 24 eines Universalmotors, in dem eine Läuferwicklung 18 entlang eines Läuferblechpakets 34 gewickelt ist. Der Läufer 24 weist eine Läuferachse 36 auf, entlang der alle drehenden Teile des Läufers rotationsfest angeordnet sind. Das Läuferblechpaket 34 trägt die Wicklung 18, die an ihren beiden axialen Endbereichen 26, 28 zu Wicklungsköpfen 40 ausgebildet sind. Dabei ist ein erster Endbereich 28 dem Lager 30 des Läufers 24, und ein zweiter Endbereich 26 dem Kommutator 32 des Läufers 24 zugeordnet. Am Kommutator 32 wird Strom über nicht dargestellte Kohlebürsten auf die Läuferwicklung 18 übertragen, wobei durch Drehung des Läufers ein sich ständig drehendes Magnetfeld durch alternierende Bestromung der Läuferwicklung 18 im Läufer 24 erzeugt wird. Zur gerichteten Führung der Kupferlackdrähte der Läuferwicklung 18 sind diese in Nuten des geblechten Läuferblechpakets 34 eingelegt. An den jeweiligen Enden des Wicklungsbereichs 16 sind die Wicklungsköpfe 40 derart ausgebildet, um die Wicklungslagen zurück entlang des Läuferblechpakts 34 zu führen. Empirische Untersuchungen haben gezeigt, dass die größte Zahl von Wicklungsschlüssen des Läufers 24, die zu einem Ausfall des Elektromotors führen, im Bereich der Wicklungsköpfe 40 auftreten. Ihre Ursache liegt insbesondere im Blockierbetrieb, d.h. in hohen dynamischen Lastwechseln, in denen eine Grenztemperatur in den Wicklungsköpfen 40 überschritten wird, so dass die Kupferlackdrähte keine Isolationswirkung mehr haben und Kurzschlüsse zwischen den Läuferwicklungen entstehen, die zu einer Zerstörung der Läuferwicklung 18 führen. Aufgrund der hohen mechanischen und thermischen Belastungen der Wicklungsköpfe 40 ist eine sorgfältige Herstellung dieses Läuferwicklungsbereichs entscheidend für die Lebensdauer des Elektromotors. So fallen 70 % aller Winkelschleifmotoren aufgrund von Wicklungsschlüssen aus, wobei hierbei wieder 70 % aller Wicklungsschlüsse in den Wicklungsköpfen entstehen, und somit in Summe mehr als 50 % aller Motorenausfälle auf qualitative Mängel der Wicklungsköpfe zurückzuführen sind.

In Fig. 2 ist ein Wicklungskopf 40 des Stands der Technik vergrößert dargestellt, wobei die innerste Wicklungslage 38 einen sehr kleinen Wicklungsradius 42 aufweist. Die innerste Wicklungslage 38 hängt in der Luft und ist mechanisch nicht gegenüber dem Läuferblechpaket 34 abgestützt. Sowohl thermisch als auch mechanisch ist nur eine schlechte Anbindung gegenüber der Gesamtwicklung 18 und dem Läuferblechpaket 34 gegeben. Träufelharz zur Fixierung der Wicklung kann an der innersten Wicklungslage praktisch keine Anbindung finden.

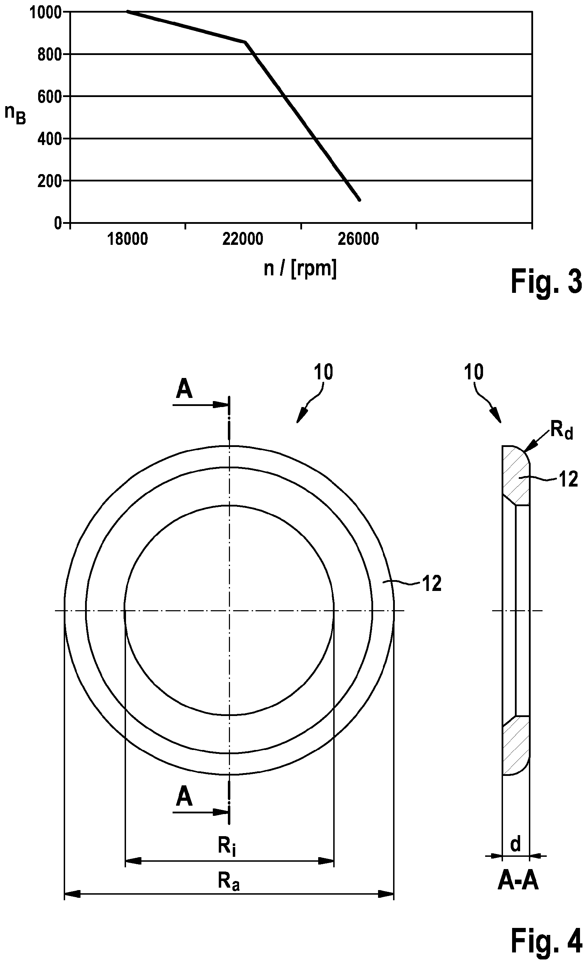

Durch empirische Untersuchungen konnte nachgewiesen werden, dass Elektromotoren bei einer hohen Bestromung eine hohe Grenztemperatur von über 210°C erreichen, so dass das Isolationssystem bei Kupferlackdrähten keine genügende Isolierung mehr bildet. In einem sogenannten Blockiervorgang wird der Läufer in eine niedrige Lastdrehzahl gefahren, so dass im direkten Anschluss im Leerlauf hohe Fliehkräfte bei einer hohen Temperatur der Läuferwicklung wirken, um einen kritischen Anwendungsfall nachzubilden. Fig. 3 stellt eine Anzahl von Blockiervorgängen N_{B} gegenüber erreichten Leerlaufdrehzahlen n eines Elektromotors bis zu dessen Ausfall bei Zerstörung der Läuferwicklung dar, wobei deutlich wird, dass bei hohen Leerlaufzahlen n nur eine geringe Anzahl von Blockiervorgänge benötigt werden, um einen Ausfall des Motors zu bewirken. Bei Blockiervorgängen unter 18.000 können bis zu 1.000 Blockiervorgänge durchgeführt werden, bis es zum Ausfall des Elektromotors aufgrund von Wicklungsschlüssen kommt. Somit nimmt bei steigender Drehzahl die Haltbarkeit des Läufers, insbesondere bei dynamischen Lastwechseln dramatisch ab.

Um eine Verbesserung der Resistenz gegenüber solchen dynamischen Lastwechseln bzw. Blockiervorgängen zu bieten, ist in Fig. 4 ein erstes Ausführungsbeispiel eines erfindungsgemäßen Ringelements zur mechanischen Abstützung der Wicklungsköpfe dargestellt. Das Ringelement 10 weist eine flach verlaufende Seitenoberfläche und eine konvexe bzw. radial abgerundete Teiloberfläche 12 auf, die die innerste Lage der Wicklung bei einem optimalen Verlauf der Läuferwicklung unterstützt. Somit wird ein enger Biegeradius der innersten Wicklungslage entschärft und die Läuferwicklung zwangsgeführt. Des Weiteren ist der Leerraum zwischen innerster Wicklungslage und Isolatorlamellenelement aufgefüllt, so dass der kritische Bereich der Wicklung mechanisch abgestützt wird, und Träufelharz eine Möglichkeit zur Anbindung hat. Das Ringelement weist eine sehr viel geringere Dicke als der Durchmesser auf, wobei die Dicke gleichzeitig dem Biegeradius entspricht. Optimal wird als Biegeradius für übliche Elektrowerkzeugmaschinen ein Wert von 2 bis 3 mm angesehen. So kann beispielsweise das Ringelement einen Außendurchmesser von 30 bis 35 mm und einen Innendurchmesser von 18 bis 23 mm aufweisen.

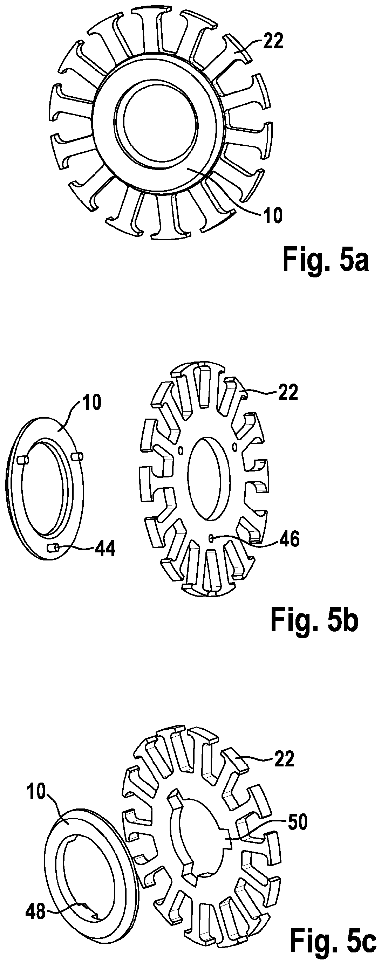

In den Figs. 5a bis 5c sind alternative Ausführungsbeispiele der Kombination von Ringelement und Isolatorlamellenelement 22 dargestellt. In Fig. 5a ist eine einstückige Ausformung von Ringelement 10 und Isolatorlamellenelement 22 gezeigt. Das Isolatorlamellenelement 22 weist zahnförmige Lamellen auf, durch die die Wicklungsstränge geführt und somit Ausrichtungen der Läuferwicklungen und somit des Läufermagnetfeldes vorgegeben werden. Das Ringelement 10 dient zur Abstützung der Wicklungsköpfe, so dass ein kritischer innerster Biegewinkel verhindert und die innere Wicklungslage mechanisch abgestützt werden kann. In der Fig. 5b ist ein zweiteiliges Set von Ringelement 10 und Isolatorlamellenelement 22 dargestellt. Das Ringelement 10 weist drei Stecknasen 44 auf, die in korrespondierende Steckausnehmungen 46 des Isolatorlamellenelements 22 zur Fixierung eingesteckt werden können. Somit kann eine mechanische Fixierung der beiden Elemente 10, 22 erreicht werden. Fig. 5c weist ein alternatives Ausführungsbeispiel einer zweiteiligen Kombination von Ringelement 10 und Isolatorlamellenelement 22 auf, wobei das Ringelement 10 Rastnasen 48 aufweist, in die drei Rastnasenausnehmungen 50 im Innendurchmesser des Isolatorlamellenelements 22 gesteckt werden können, um eine mechanische Verbindung der beiden Elemente zu erreichen. Beim Zusammenbau des Läuferrohlings kann eine hohe Herstellgeschwindigkeit durch einteilige bzw. nicht mechanisch verbundene zweiteilige Ausführung von Ringelement 10 und Isolatorlamellenelement 22 erreicht werden. Das Ringelement kann dabei auf das Isolatorlamellenelement aufgesteckt bzw. aufgeschoben werden, geklebt, ultraschallgeschweißt durch Zwei-Komponenten-Verfahren ausgebildet, aufgeschäumt oder einstückig aus dem Isolationslamellenelement ausgeformt werden.

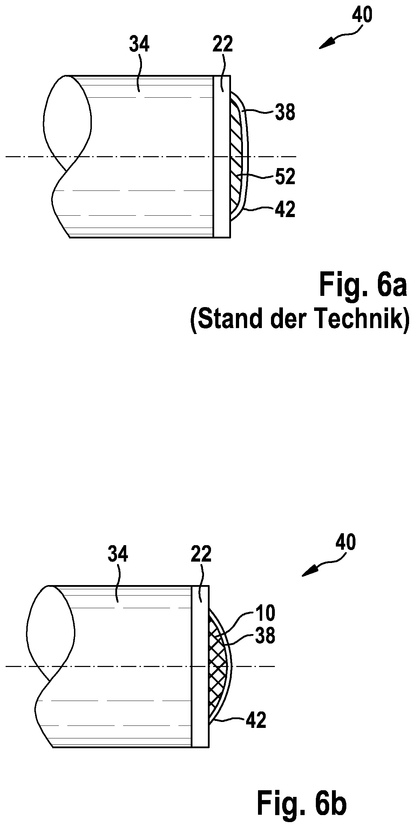

In den Figs. 6a und 6b ist schematisch ein Vergleich eines Wicklungskopfs 40 des Stands der Technik gegenüber einem erfindungsgemäßen Ausführungsbeispiels eines Wicklungskopfs 40 dargestellt. In Fig. 6a ist ein Läuferblechpaket 34 des Stands der Technik dargestellt, an dessen axialen Endbereich des Wicklungsabschnitts ein Isolatorlamellenelement 22 angeordnet ist. Die innerste Lage der Läuferwicklung 38 wird um einen Luftraum 52 geführt, wobei die Abwinklung der innersten Wicklungslage 38 einen kritischen Biegeradius 42 unterschreitet, da keine Abstützung und keine mechanische Fixierung der innersten Wicklungslage 38 vorhanden ist. Weder thermisch noch mechanisch erfolgt eine Stabilisierung der inneren Wicklungslage 38, so dass insbesondere im schnellen Lastwechselbetrieb Wicklungskurzschlüsse auftreten können.

Demgegenüber zeigt Fig. 6b einen Wicklungskopf 40, in dem ein Ringelement 10 den Raum zwischen innerem Wicklungslager 38 und Isolatorlamellenelement 22 ausfüllt, so dass ein geringer Abwinklungsradius 42 erreicht werden kann. Hierdurch wird eine wesentlich verbesserte thermische und mechanische Resistenz erreicht und die Lebensdauer des Elektromotors deutlich erhöht.

Nach umfangreichen Versuchen auf einem Prüfstand konnte nachgewiesen werden, dass durch den Einsatz des verbindungsgemäßen Ringelements ein um den Faktor 6 bis 10 erhöhte Lebensdauer und Reduktion von Wicklungsschlüssen im Wicklungskopfbereich erreicht werden kann. Somit kann davon ausgegangen werden, dass eine Reduktion der Ausfälle in einer Größenordnung von etwa 30 % bis 50 % bei bekannten Elektrowerkzeugmaschinen durch den Einsatz eines erfindungsgemäßen Ringelements zur Abstützung der Wicklungsköpfe erreicht werden kann.

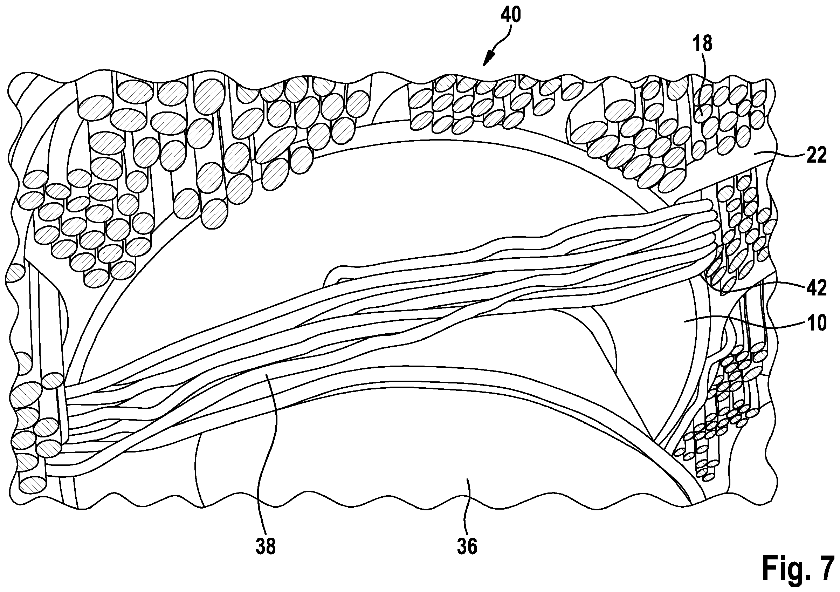

Schließlich zeigt Fig. 7 perspektivisch den Einsatz eines Ringelements 10 in einem Wicklungskopf 40 mit Läuferwicklung 18, bei der eine innere Lage 38 von Kupferlackdrähten über das Ringelement 10 geführt, abgestützt und mit einem relativ großem Biegeradius 42 in einer optimalen Form fixiert ist, so dass die Gefahr von Wicklungsschlüssen deutlich verringert werden kann.

Die Erfindung ermöglicht die Bereitstellung von Elektrowerkzeugmaschinen mit hoher Kompaktheit, großer Energiedichte sowie der Fähigkeit eine hohe Anzahl von dynamischen Lastwechseln zwischen Blockierbetrieb und Freilaufbetrieb standzuhalten, wobei die Ausfallwahrscheinlichkeit extrem gesenkt und damit die Langlebigkeit der Elektrowerkzeugmaschine deutlich verlängert werden kann. Die erfindungsgemäße Modifikation des Läufers durch den Einsatz eines Ringelements verändert dass Elektromotorendesign kaum, so dass durch eine einfache Maßnahme eine deutliche Qualitätsverbesserung eines bestehenden Elektromotors erreicht werden kann.

## Patentansprüche

1. Ringelement (10) umfassend eine konvexe, insbesondere abgerundete Teiloberfläche (12) zur Anordnung an zumindest einem axialen Endbereich (26, 28) eines Wicklungsabschnittes (16) eines Elektromotor-Läufers (24), **dadurch gekennzeichnet, dass** die Teiloberfläche (12) eine minimale Radiuskrümmung R_{d} zur Abstützung einer inneren Lage (38) einer Läuferwicklung (18) am Wicklungskopf (40) so bereitstellt, dass das Ringelement (10) eine konvexe, abgerundete Form eines drahtführenden Teilbereichs aufweist, der in etwa einem natürlichen Verlauf der Läuferwicklung (18) angepasst ist, wobei das Verhältnis Außen- zum Innendurchmesser Rₐ/Rᵢ 1.3 bis 1.8, insbesondere 1.5 bis 1.6, liegt.

2. Ringelement (10) nach Anspruch 1, **dadurch gekennzeichnet, dass** das Ringelement (10) einstückig mit einem Isolierlamellenelement (22) ausgeformt ist.

3. Ringelement (10) nach Anspruch 2, **dadurch gekennzeichnet, dass** das Ringelement (10) anspritzbar, anschäumbar oder aus dem Isolierlamellenelement (22) durch Umformung ausformbar ist.

4. Ringelement (10) nach Anspruch 1, **dadurch gekennzeichnet, dass** das Ringelement (10) mit einem Isolierlamellenelement (22) verbindbar ist.

5. Ringelement (10) nach Anspruch 4, **dadurch gekennzeichnet, dass** das Ringelement (10) auf das Isolierlamellenelement (22) aufsteckbar, anklebbar und/oder anschweißbar ist.

6. Ringelement (10) nach einem der vorangegangenen Ansprüche, wobei das Ringelement (10) aus einem isolierenden Material, insbesondere aus hitzebeständigem Kunststoff mit maximaler Einsatztemperatur T_{C}>210°C besteht.

7. Ringelement (10) nach einem der vorangegangenen Ansprüche, **dadurch gekennzeichnet, dass** das Verhältnis Außendurchmesser zur Dicke Rₐ/d im Bereich 10 bis 15, insbesondere 12.5 bis 13.5 oder die Dicke d im Bereich 1.5 mm bis 3.5 mm, bevorzugt 2 mm bis 3 mm liegt und/oder der Krümmungsradius R_{d} der konvexen Teiloberfläche (12) im Wesentlichen der Dicke d entspricht.

8. Isolierlamellenelement (22) für einen Elektromotor-Läufer (24) zur Bewicklung mit einer Läuferwicklung (18) umfassend ein Ringelement (10) nach einem der vorangegangenen Ansprüche.

9. Elektromotor, insbesondere Universalmotor umfassend einen Läufer (24) mit einer Läuferwicklung (18) aufweisend zumindest ein Ringelement (10) nach einem der vorangegangenen Ansprüche 1 bis 7.

10. Elektrowerkzeugmaschine, insbesondere handgehaltene Elektrowerkzeugmaschine wie Winkelschleifer, Bohrmaschine, Sägewerkzeug oder ähnliches umfassend einen Elektromotor nach Anspruch 9.

## Claims

1. Ring element (10) comprising a convex, in particular rounded-off, partial surface (12) to be arranged at at least one axial end region (26, 28) of a winding section (16) of an electric motor rotor (24), **characterized in that** the partial surface (12) provides a minimum radius of curvature R_{d} for supporting an inner layer (38) of a rotor winding (18) on the end winding (40) such that the ring element (10) has a convex, rounded-off form of a wire-guiding partial region that is adapted approximately to a natural path of the rotor winding (18), the ratio of outside diameter to inside diameter Rₐ/Rᵢ lying in the range of 1.3 to 1.8, in particular 1.5 to 1.6.

2. Ring element (10) according to Claim 1, **characterized in that** the ring element (10) is formed in one piece with a lamellar insulating element (22).

3. Ring element (10) according to Claim 2, **characterized in that** it is possible for the ring element (10) to be molded on by an injection-molding or foaming process or fashioned from the lamellar insulating element (22) by a forming process.

4. Ring element (10) according to Claim 1, **characterized in that** it is possible for the ring element (10) to be connected to a lamellar insulating element (22).

5. Ring element (10) according to Claim 4, **characterized in that** it is possible for the ring element (10) to be clipped on, adhesively attached and/or attached by welding to the lamellar insulating element (32).

6. Ring element (10) according to one of the preceding claims, the ring element (10) consisting of an insulating material, in particular of a heat-resistant plastic with a maximum operating temperature T_{C} > 210°C.

7. Ring element (10) according to one of the preceding claims, **characterized in that** the ratio of outside diameter to thickness Rₐ/d lies in the range of 10 to 15, in particular 12.5 to 13.5, or the thickness d lies in the range of 1.5 mm to 3.5 mm, preferably 2 mm to 3 mm, and/or the radius of curvature R_{d} of the convex partial surface (12) corresponds substantially to the thickness d.

8. Lamellar insulating element (22) for an electric motor rotor (24) for being wound with a rotor winding (18) comprising a ring element (10) according to one of the preceding claims.

9. Electric motor, in particular universal motor, comprising a rotor (24) with a rotor winding (18) having at least one ring element (10) according to one of the preceding Claims 1 to 7.

10. Electric power tool, in particular a hand-held electric power tool, such as an angle grinder, a drill, a saw or the like, comprising an electric motor according to Claim 9.

## Revendications

1. Élément annulaire (10), comprenant une surface partielle convexe (12), en particulier arrondie, destiné à être disposé au niveau d'au moins une région d'extrémité axiale (26, 28) d'une portion d'enroulement (16) d'un rotor (24) de moteur électrique, **caractérisé en ce que** la surface partielle (12) fournit une courbure de rayon minimal R_{d} pour supporter une couche interne (38) d'un enroulement de rotor (18) sur la tête d'enroulement (40) de telle sorte que l'élément annulaire (10) présente une forme convexe arrondie d'une région partielle guidant le fil, qui est adaptée approximativement à une allure naturelle de l'enroulement de rotor (18), le rapport du diamètre extérieur au diamètre intérieur Rₐ/Rᵢ étant compris entre 1,3 et 1,8, en particulier entre 1,5 et 1,6.

2. Élément annulaire (10) selon la revendication 1, **caractérisé en ce que** l'élément annulaire (10) est formé d'une seule pièce avec un élément à lamelles d'isolation (22).

3. Élément annulaire (10) selon la revendication 2, **caractérisé en ce que** l'élément annulaire (10) peut être appliqué par pulvérisation, par moussage ou peut être formé par déformation à partir de l'élément à lamelles d'isolation (22).

4. Élément annulaire (10) selon la revendication 1, **caractérisé en ce que** l'élément annulaire (10) peut être connecté à un élément à lamelles d'isolation (22).

5. Élément annulaire (10) selon la revendication 4, **caractérisé en ce que** l'élément annulaire (10) peut être enfiché, collé et/ou soudé sur l'élément à lamelles d'isolation (22).

6. Élément annulaire (10) selon l'une quelconque des revendications précédentes, dans lequel l'élément annulaire (10) se compose d'un matériau isolant, en particulier de plastique résistant à la chaleur avec une température d'utilisation maximale T_{C} > 210°C.

7. Élément annulaire (10) selon l'une quelconque des revendications précédentes, **caractérisé en ce que** le rapport du diamètre extérieur à l'épaisseur Rₐ/d est situé dans une plage de 10 à 15, en particulier de 12,5 à 13,5 ou l'épaisseur d est située dans une plage de 1,5 mm à 3,5 mm, de préférence de 2 mm à 3 mm et/ou le rayon de courbure R_{d} de la surface partielle convexe (12) correspond essentiellement à l'épaisseur d.

8. Élément à lamelles d'isolation (22) pour un rotor (24) de moteur électrique, destiné à être enroulé avec un enroulement de rotor (18), comprenant un élément annulaire (10) selon l'une quelconque des revendications précédentes.

9. Moteur électrique, en particulier moteur universel, comprenant un rotor (24) avec un enroulement de rotor (18) présentant au moins un élément annulaire (10) selon l'une quelconque des revendications 1 à 7.

10. Machine-outil électrique, en particulier machine-outil électrique à main telle qu'une meuleuse d'angle, une perceuse, un outil de sciage ou similaire, comprenant un moteur électrique selon la revendication 9.
